# EUROPEAN PATENT SPECIFICATION

(11) **EP 3 503 613 B1**
(45) Date of publication and mention of the grant of the patent: **06.10.2021**
(21) Application number: 17854608.1
(22) Date of filing: 21.08.2017
(51) Int. Cl.: H04W 16/28, H04B 7/06, H04B 7/08

(54) **METHOD, DEVICE AND SYSTEM FOR TRACKING WAVE BEAM, AND STORAGE MEDIUM**
VERFAHREN, VORRICHTUNG UND SYSTEM ZUR ORTUNG EINES WELLENSTRAHLS UND SPEICHERMEDIUM
PROCÉDÉ, DISPOSITIF ET SYSTÈME DE SUIVI DE FAISCEAU ONDE, ET SUPPORT D'INFORMATIONS

(30) Priority: 27.09.2016 CN 201610856300
(43) Date of publication of application: 26.06.2019
(73) Proprietor: Huawei Technologies Co., Ltd., Longgang District Shenzhen, Guangdong 518129 (CN)
(72) Inventor: WU, Lu, Shenzhen Guangdong 518129 (CN); SHI, Hongzhe, Shenzhen Guangdong 518129 (CN); JIN, Huangping, Shenzhen Guangdong 518129 (CN)
(74) Representative: Pfenning, Meinig & Partner mbB
(86) International application number: PCT/CN2017/098275
(87) International publication number: WO 2018/059156

(56) References cited:
- WO-A1-2015/141065
- WO-A1-2015/141065
- CN-A- 105 227 281
- CN-A- 106 470 096
- US-A1- 2012 052 828
- US-A1- 2016 105 872

## Description

### TECHNICAL FIELD

This application relates to the field of communications technologies, and in particular, to a beam tracking method and system, a device, and a storage medium.

### BACKGROUND

A Long Term Evolution (English: Long Term Evolution, LTE for short) system or a Long Term Evolution-Advanced (English: Long Term Evolution-Advanced, LTE-A for short) system includes a transmit end device and a receive end device. The transmit end device may communicate with the receive end device by using a beam (English: beam). In addition, to ensure communication quality, the beam needs to be tracked. The transmit end device may be a base station, and the receive end device may be user equipment (English: User equipment, UE for short).

In the prior art, a beam is tracked through beam sweeping by a base station and beam matching by UE. Specifically, a plurality of channel state information reference signal (English: Channel State Information Reference Signal, CSI-RS for short) ports may be configured for the base station. Each CSI-RS port corresponds to at least one beam. Each beam has one beam direction. Within each sweep period, the base station sends a CSI-RS to the UE by using each of the plurality of CSI-RS ports, and the UE calculates received signal quality based on each of a plurality of received CSI-RSs, then evaluates the plurality of beams based on a plurality of pieces of calculated received signal quality, determines an optimal beam in the plurality of beams based on an evaluation result, and feeds back the optimal beam to the base station. A process in which the base station sends the CSI-RS to the UE by using each of the plurality of CSI-RS ports may be referred to as beam sweeping. A process in which the UE determines the optimal beam may be referred to as beam matching. The optimal beam may be a beam corresponding to best received signal quality in the plurality of pieces of received signal quality. A beam direction of the optimal beam usually points to the UE.

During a process of implementing this application, the inventor discovers that the prior art has at least the following problem: In the prior art, UE determines an optimal beam based on received signal quality of a CSI-RS, and therefore, accuracy for determining the optimal beam by WO 2015/141065 A1 discloses an radio communication method between a base station and a user equipment, wherein the method comprises: sending, by the base station, a beam steam including a first beam for transmitting data to the user equipment and a plurality second beams for transmitting a precoded reference signal in a direction toward a vicinity of the first beam; selecting, by the user equipment, upon receiving the beam stream, one or more suitable beam index; and feeding back, by the user equipment, the suitable beam index, to the base station.
US 2012/052828 A1 discloses a beam selection method between base stations and a customer premises equipment, this method comprising a step of triggering a beam scanning by determining whether a SINR of a currently serving beam received by the customer premises equipment falls below a trigger threshold associated with the SINR.

### SUMMARY

To resolve a problem in the prior art that accuracy for determining an optimal beam is relatively low, embodiments of this application provide a beam tracking method and system, a device, and a storage medium. The technical solutions are defined in the appended independent claims.

According to a first aspect, a beam tracking method performed by a receive end device is provided. The method includes: receiving a demodulation reference signal DMRS sent by a transmit end device; and feeding back an updated beam to the transmit end device when determining, based on the DMRS, that a beam deviation occurs characterized by further comprising: feeding back indication information to the transmit end device when determining, based on the DMRS, that no beam deviation occurs, wherein the indication information is used to indicate that no beam deviation occurs;wherein a feedback mode of the receive end device includes a periodic feedback mode and a non-periodic feedback mode;wherein in the periodic feedback mode, the receive end device feeds back the indication information to the transmit end device within a current feedback period, wherein a duration of a feedback period of the periodic feedback mode of the receive end device is equal to a duration of a beam sweep period of the transmit end device, and the beam sweep period and the feedback period are the same period.

Optionally, the determining, based on the DMRS, that a beam deviation occurs specifically includes: determining received signal quality based on the DMRS; and determining, when the received signal quality is less than a preset quality threshold, that the beam deviation occurs.

Optionally, feeding back an updated beam to the transmit end device specifically comprises: determining, when the transmit end device performs beam sweeping, the updated beam by performing beam matching; and feeding back the updated beam to the transmit end device.

Optionally, the feeding back an updated beam to the transmit end device when determining, based on the DMRS, that a beam deviation occurs specifically comprises: determining received signal quality based on the DMRS; instructing, when a degree to which the received signal quality is less than a preset quality threshold exceeds a preset threshold, the transmit end device to perform beam sweeping; determining, when the transmit end device performs beam sweeping, the updated beam by performing beam matching; and feeding back the updated beam to the transmit end device.

In a second aspect of the invention a receive end device is provided. The receive end device comprises:
a receiving module, configured to receive a demodulation reference signal DMRS sent by a transmit end device; and a first feedback module, configured to feed back an updated beam to the transmit end device when determining, based on the DMRS, that a beam deviation occurs;characterized by further comprising:a feedback module, configured to feed back indication information to the transmit end device when determining, based on the DMRS, that no beam deviation occurs, wherein the indication information is used to indicate that no beam deviation occurs; wherein a feedback mode of the receive end device includes a periodic feedback mode and a non-periodic feedback mode; wherein in the periodic feedback mode, the receive end device feeds back the indication information to the transmit end device within a current feedback period, wherein a duration of a feedback period of the periodic feedback mode of the receive end device is equal to a duration of a beam sweep period of the transmit end device, and the beam sweep period and the feedback period are the same period.

In a third aspect of the invention a beam tracking system is provided. The beam tracking system comprises above receive end device and a transmit end device, and the transmit end device comprises: a first sending module, configured to send a demodulation reference signal DMRS to a receive end device; and a first receiving module, configured to receive an updated beam fed back by the receive end device, wherein the updated beam is fed back by the receive end device when the receive end device determines, based on the DMRS, that a beam deviation occurs.

In a fourth aspect of the invention a receive end device is provided which comprises a processor, a network interface, a memory, and a bus, wherein the memory and the network interface are separately connected to the processor by using the bus, the processor is configured to execute an instruction stored in the memory, and the processor implements the beam tracking method according to above disclosure under paragraph [0008].

In a fifth aspect, a computer readable storage medium is provided. The computer readable storage medium stores an instruction, and when being run on a computer, the computer readable storage medium enables the computer to perform the beam tracking method according to above disclosure under paragraph [0008]. According to a sixth aspect of the invention a computer program product is provided which comprises an instruction, wherein when being run on a computer, the computer program product enables the computer to perform the beam tracking method according to above disclosure under paragraph [0008].

### BRIEF DESCRIPTION OF DRAWINGS

FIG. 1 is a schematic diagram of an implementation environment according to embodiments of this application;
FIG. 2 is a method flowchart of a beam tracking method according to an embodiment of this application;
FIG. 3-1 is a flowchart of a method for performing data transmission by using a beam according to an embodiment of this application;
FIG. 3-2 is a flowchart of a method of determining, by a receive end device based on a DMRS, whether a beam deviation occurs according to the embodiment shown in FIG. 3-1;
FIG. 3-3 is a schematic diagram in which a beam deviation occurs according to the embodiment shown in FIG. 3-1;

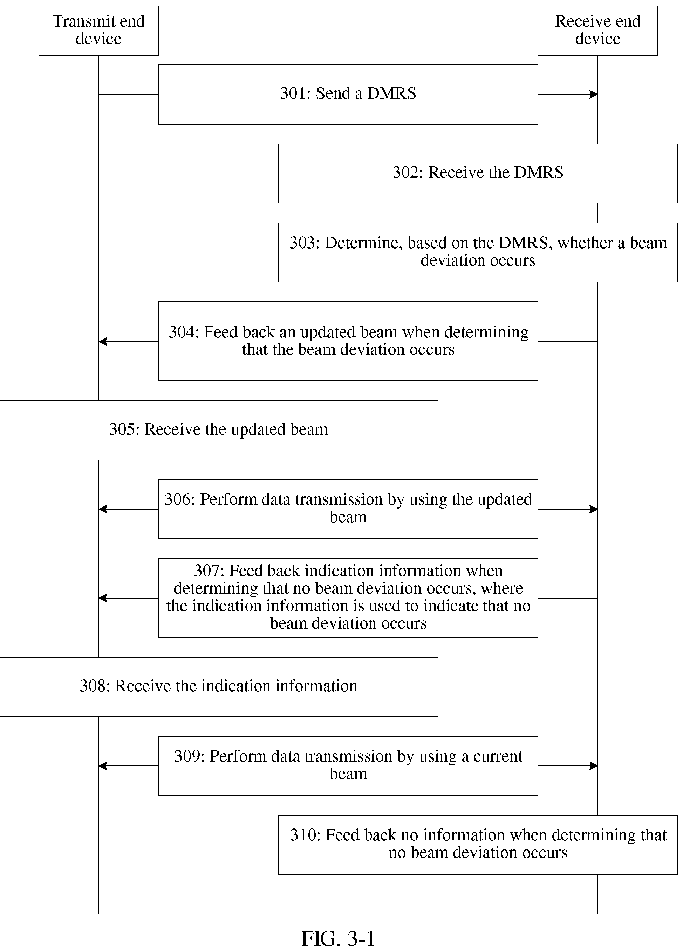

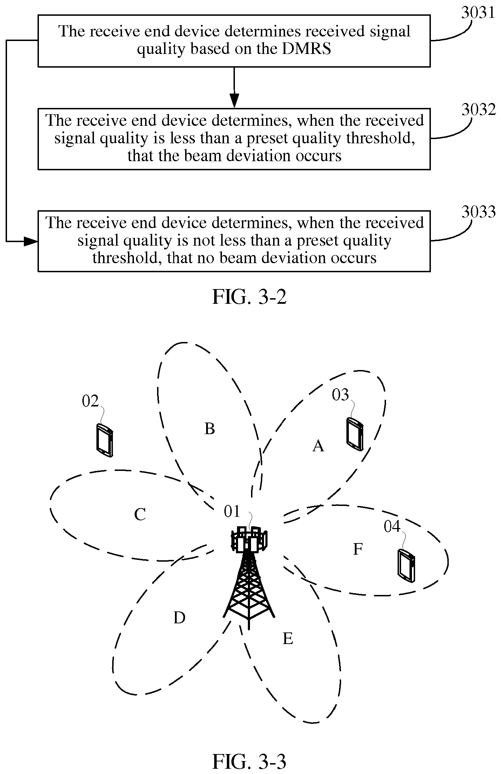

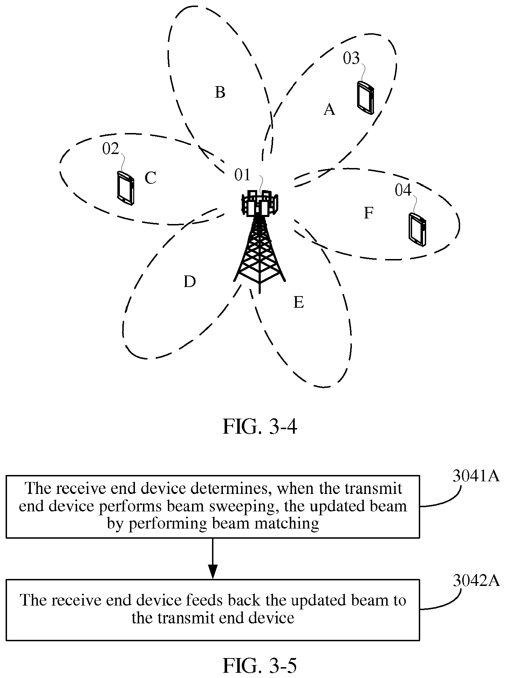

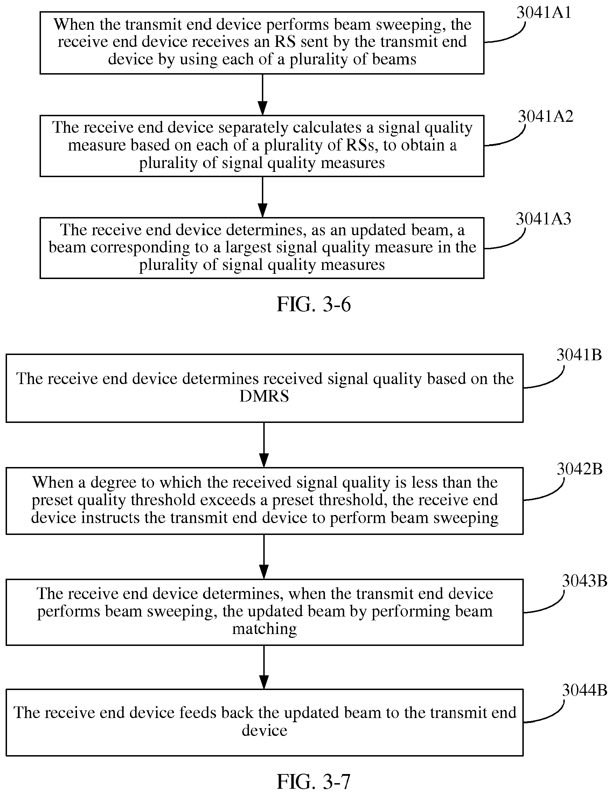

FIG. 3-4 is a schematic diagram in which no beam deviation occurs according to the embodiment shown in FIG. 3-1;
FIG. 3-5 is a flowchart of a method of feeding back, by a receive end device, an updated beam to a transmit end device according to the embodiment shown in FIG. 3-1;
FIG. 3-6 is a flowchart of a method of determining, by a receive end device, an updated beam according to the embodiment shown in FIG. 3-1;
FIG. 3-7 is a flowchart of another method of feeding back, by a receive end device, an updated beam to a transmit end device according to the embodiment shown in FIG. 3-1;

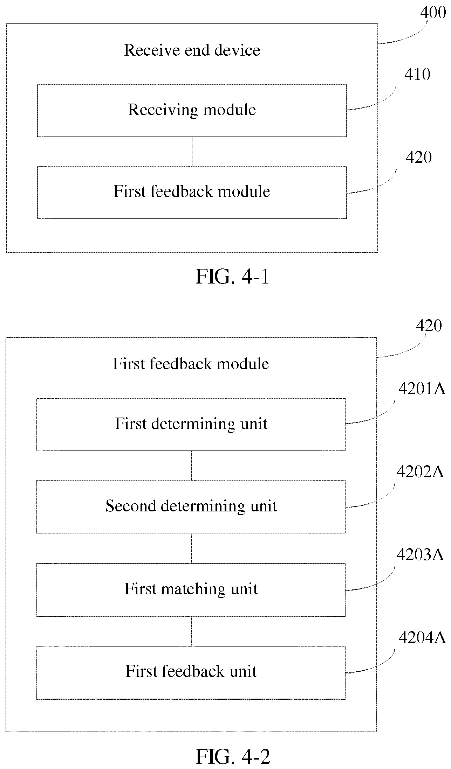

FIG. 4-1 is a block diagram of a receive end device according to an embodiment of this application;
FIG. 4-2 is a block diagram of a first feedback module according to the embodiment shown in FIG. 4-1;

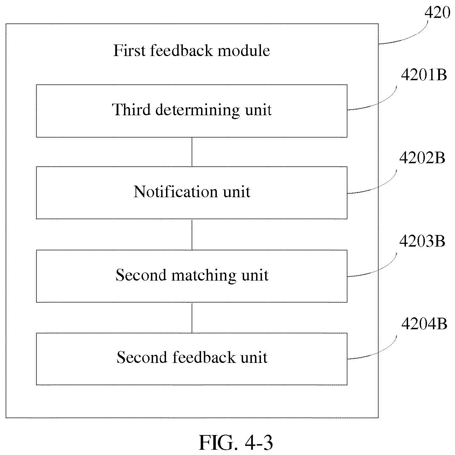

FIG. 4-3 is a block diagram of another first feedback module according to the embodiment shown in FIG. 4-1;

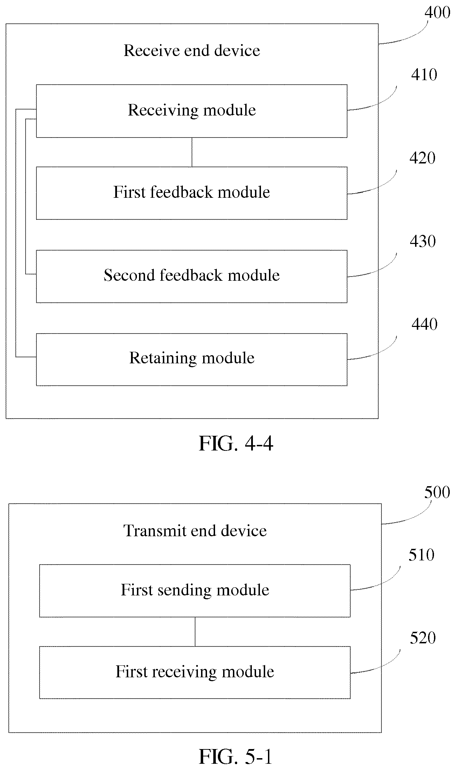

FIG. 4-4 is a block diagram of another receive end device according to an embodiment of this application;
FIG. 5-1 is a block diagram of a transmit end device according to an embodiment of this application;

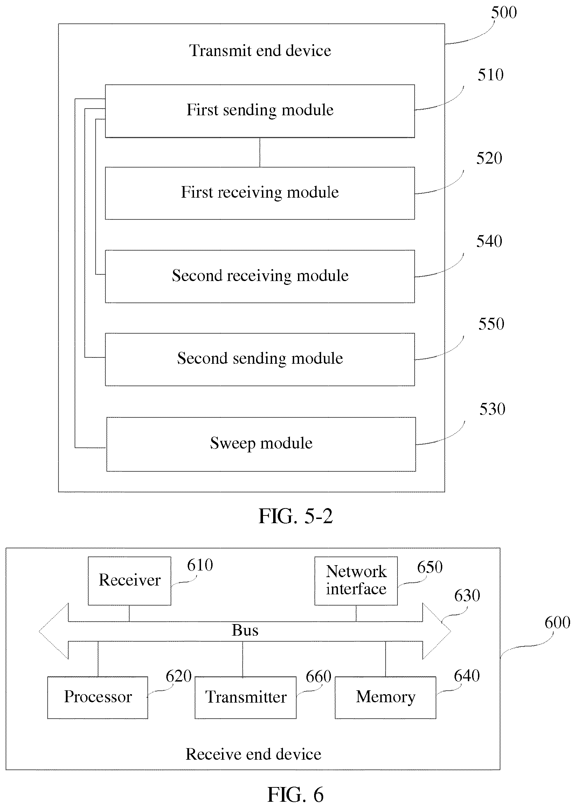

FIG. 5-2 is a block diagram of another transmit end device according to an embodiment of this application;
FIG. 6 is a schematic structural diagram of a receive end device according to an embodiment of this application;

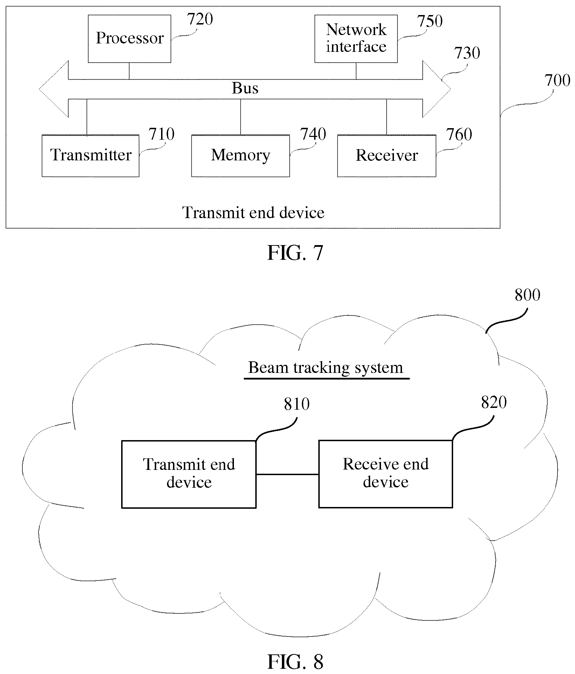

FIG. 7 is a schematic structural diagram of a transmit end device according to an embodiment of this application; and
FIG. 8 is a schematic structural diagram of a beam tracking system according to an embodiment of this application.

### DESCRIPTION OF EMBODIMENTS

Before this application is described in detail, a beamforming (English: Beamforming) technology and a beam that is provided in this application are briefly described:

The beamforming technology is a signal processing technology implemented based on an antenna array. In the technology, a phase and/or amplitude of a signal transmitted by an antenna component (or an antenna port) is adjusted by adjusting a weighting coefficient of the antenna component (or the antenna port), thereby changing a superimposition effect, during a transmission process, of signals transmitted by antenna components in the antenna array (where the antenna array includes a plurality of antenna components), to obtain a beam that is orientation-based. An orientation of the beam is a beam direction.

In a wireless communications system, different devices (such as a base station and UE) may communicate with each other by using a beam. The beam may be represented by using a beam matrix. The beam matrix includes a plurality of column vectors. Each column vector may represent one beam. Therefore, the column vectors of the beam matrix may also be referred to as beam vectors. One beam matrix includes a plurality of beam vectors. Each beam vector includes at least one element. The element in each beam vector corresponds one-to-one to the antenna components in the antenna array. Each element in the beam vector represents a weighting coefficient of an antenna component corresponding to the element. Therefore, an order of the beam vectors is equal to a quantity of antenna components in the antenna array. Usually, the beam matrix may be referred to as a precoding matrix (English: precoding matrix) or a steering matrix (English: steering matrix), and the beam vector may be referred to as a precoding vector (English: precoding vector) or a steering vector (English: steering vector). During a specific implementation process, beamforming may be implemented in a baseband part. The beamforming implemented in this manner is referred to as digital beamforming (English: digital beamforming). Beamforming may alternatively be implemented in a radio frequency part. The beamforming implemented in this manner is referred to as analog beamforming (English: analog beamforming). Beamforming may alternatively be implemented in both the baseband part and the radio frequency part. The beamforming implemented in this manner is referred to as hybrid beamforming (English: hybrid beamforming).

When a signal is transmitted by using a beam, strength of the signal within a beam coverage is greater than strength of the signal outside a beam coverage. Therefore, a beam direction may be considered as a signal transmit direction. The beam direction may be adjusted by adjusting a beam vector corresponding to the beam, to adjust the signal transmit direction.

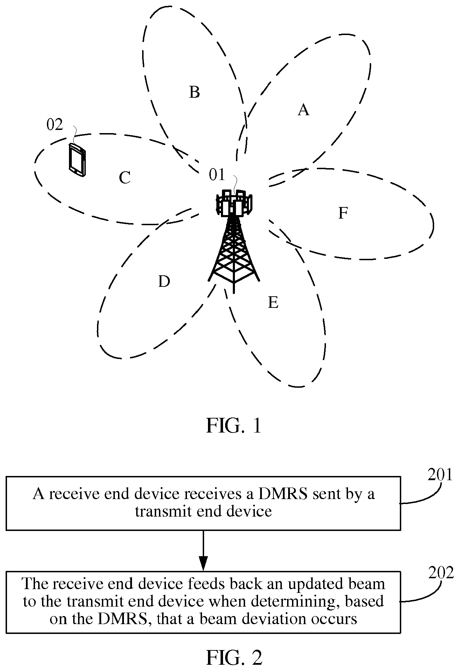

FIG. 1 is a schematic diagram of an implementation environment according to embodiments of this application. The implementation environment provides a wireless communications system. The wireless communications system can implement a beam tracking function. Therefore, the wireless communications system may also be referred to as a beam tracking system. Referring to FIG. 1, the implementation environment includes: a base station 01 and UE-02.

The base station 01 may be a transmit end device, or may be a receive end device. The UE-02 may be a transmit end device, or may be a receive end device. When the base station 01 is a transmit end device, the UE-02 is a receive end device. When the base station 01 is a receive end device, the UE-02 is a transmit end device. In this implementation environment and the following embodiments, descriptions are provided by using an example in which the base station 01 is a transmit end device, and the UE-02 is a receive end device.

A plurality of beams are configured for the transmit end device. The transmit end device may transmit a sweep signal (such as a CSI-RS) to the receive end device based on a preset sequence by using each of the plurality of beams, to traverse the plurality of beams. This process may be referred to as beam sweeping (English: beam sweep). The sweep signal may usually be an always on (English: always on) signal, for example, but not limited to, a synchronization signal, a system information signal, or a reference signal. The transmit end device may have a sweep period. Within each sweep period, the transmit end device performs beam sweeping. For example, as shown in FIG. 1, a total of six beams, namely, beams A to F (where the beams are shown by ellipses in dashed lines) are configured for the base station 01. The base station 01 may transmit a sweep signal to the UE-02 based on a preset sequence by using each of the six beams, to perform beam sweeping on the six beams. The preset sequence may be, for example, but not limited to, A-B-C-D-E-F, or A-D-B-E-C-F.

When the transmit end device performs beam sweeping, the receive end device may receive a sweep signal transmitted by the transmit end device by using a plurality of beams, determine received signal quality of sweep signals, determine, based on the determined received signal quality of the sweep signals, a beam on which the receive end device is located, and feed back the beam on which the receive end device is located to the transmit end device. This process may be referred to as beam matching. The beam on which the receive end device is located may be a beam whose received signal quality is the best. The beam on which the receive end device is located may alternatively be understood as a beam whose beam direction points to the receive end device. For example, as shown in FIG. 1, the UE-02 receives a sweep signal transmitted by the base station 01 based on the sequence of A-D-B-E-C-F by using the six beams, namely, the beams A to F, determines, based on the sweep signal sent by using the six beams, a beam whose received signal quality is the best, and determines the beam whose received signal quality is the best in the six beams as a beam on which the UE-02 is located. In FIG. 1, the beam on which the UE-02 is located is a beam C. Therefore, the UE-02 may feed back the beam C to the base station 01. For example, the UE-02 feeds back a beam identifier of the beam C to the base station 01.

During actual application, the receive end device moves, causing a location at which the receive end device is located to be changed, and causing a beam deviation to occur (that is, a beam on which the receive end device is located is changed, in other words, the receive end device leaves a coverage of the original beam and enters a coverage of another beam). When the beam deviation occurs, if the transmit end device communicates with the receive end device by using the beam before the deviation, signal receiving quality is reduced, and even normal communication is affected. The beam on which the receive end device is located may be updated by performing the processes of beam sweeping and beam matching, to ensure normal communication. However, during the processes, the receive end device determines, based on the CSI-RS, the beam on which the receive end device is located. Therefore, accuracy for determining an optimal beam by the receive end device is relatively low, and in addition, there may be a problem that signaling overheads are relatively large or the signal receiving quality is reduced. On one hand, within each sweep period, the receive end device feeds back the beam on which the receive end device is located to the transmit end device. Within two adjacent sweep periods, the beam on which the receive end device is located may not be changed. Therefore, in this case, when the receive end device feeds back the beam on which the receive end device is located, unnecessary feedback overheads are caused. For example, the UE-02 moves from a coverage of the beam C to a coverage of a beam D, and in this case, a beam deviation occurs. If the base station 01 still communicates with the UE-02 by using the beam C, the signal receiving quality is reduced. When the UE-02 moves from the coverage of the beam C to the coverage of the beam D, the UE-02 may update the beam on which the UE-02 is located to the beam D in time through the beam sweeping and the beam matching, and feeds back the beam D to the base station 01, so that the base station 01 transmits a signal to the base station 01 by using the beam D. However, if the UE-02 is not moved out of the coverage of the beam C, the UE-02 feeds back the beam C to the base station 01 within each sweep period, causing unnecessary feedback overheads. On the other hand, if the receive end device is in a high-speed moving state, in this case, a time interval between two adjacent sweep periods is relatively long, causing the receive end device to be incapable of updating the beam in time, causing the signal receiving quality to be reduced, and affecting communication quality. For example, the UE-02 is in the high-speed moving state. Within a time interval between two adjacent sweep periods, the UE-02 moves from the coverage of the beam C to the coverage of the beam D, and in this case, a beam deviation occurs. Because the base station 01 does not perform beam sweeping within the time interval between the two adjacent sweep periods, the UE-02 cannot update the beam in time and still performs communication by using the beam C, causing the signal receiving quality to be reduced.

During actual application, during a process in which the transmit end device communicates with the receive end device, the transmit end device may send a demodulation reference signal (English: Demodulation Reference Signal, DMRS for short) to the receive end device. In this implementation environment, the receive end device may determine, based on the DMRS, whether the beam deviation occurs. If the beam deviation occurs, the receive end device feeds back the beam on which the receive end device is located to the transmit end device. In this way, the accuracy for determining the optimal beam can be improved. In addition, in this implementation environment, if no beam deviation occurs, the receive end device does not feed back the beam on which the receive end device is located to the transmit end device or feeds back only indication information to indicate that no beam deviation occurs. In this way, the feedback overheads may be reduced, and because the receive end device may determine, based on the DMRS, whether the beam deviation occurs, and may determine an updated beam without waiting for the transmit end device to perform beam sweeping, the receive end device can update the beam in time, ensuring the communication quality.

It should be noted that, for specific processes of technologies such as beamforming, beam sweeping, beam matching, and beam tracking, refer to the prior art. Specific content of the specific processes is clearly described in the prior art, and therefore is not described in detail again in this document. In addition, the foregoing descriptions are used only to describe a rough principle of the related processes, and are not used to limit the protection scope of this application. During a specific implementation process, specific details related to the related processes may be adjusted based on a specific requirement. Therefore, the processes provided in the embodiments of this application should be understood as covering various implementations of the processes.

FIG. 2 is a method flowchart of a beam tracking method according to an embodiment of this application. In this embodiment, descriptions are provided by using an example in which the beam tracking method is applied to a receive end device. The receive end device may be the UE-02 in the implementation environment shown in FIG. 1. Referring to FIG. 2, the method may include the following steps:
Step 201: The receive end device receives a DMRS sent by a transmit end device.
Step 202: The receive end device feeds back an updated beam to the transmit end device when determining, based on the DMRS, that a beam deviation occurs.

The receive end device may determine received signal quality based on the DMRS, and then determine whether the received signal quality is less than a preset quality threshold. If the received signal quality is less than the preset quality threshold, the receive end device determines that the beam deviation occurs. If the received signal quality is not less than the preset quality threshold, the receive end device determines that no beam deviation occurs. In this way, accuracy for determining an optimal beam can be improved. When determining that the beam deviation occurs, the receive end device may feed back the updated beam to the transmit end device. The feeding back the updated beam is, for example, but not limited to, feeding back a beam identifier of the updated beam. The received signal quality may be represented by using at least one of signal receiving power, a signal to interference plus noise ratio (English: Signal to Interference plus Noise Ratio, SINR for short), and a signal-to-noise ratio (English: Signal Noise Ratio, SNR for short).

It should be noted that, this embodiment of this application is described by using an example in which the received signal quality is represented by using the at least one of the signal receiving power, the SINR, and the SNR. During actual application, the received signal quality may be represented by using another parameter. A person skilled in the art should understand that, any parameter that can represent the received signal quality is a parameter that needs to be protected by this application. Details are not described herein in this embodiment of this application.

In summary, according to the beam tracking method provided in this embodiment of this application, the receive end device feeds back the updated beam to the transmit end device when determining, based on the DMRS, that the beam deviation occurs, and the updated beam is usually the optimal beam. Therefore, the method helps resolve a problem in the prior art that accuracy for determining the optimal beam is relatively low, and improve the accuracy for determining the optimal beam.

FIG. 3-1 is a flowchart of a method for performing data transmission by using a beam according to an embodiment of this application. This embodiment is described by using an example in which the method is applied to the implementation environment shown in FIG. 1. Referring to FIG. 3-1, the method may include the following steps.

Step 301: A transmit end device sends a DMRS to a receive end device.

The transmit end device may send the DMRS to the receive end device. The DMRS may be used by the receive end device to determine whether a beam deviation occurs. The transmit end device may send the DMRS to the receive end device by using a current beam. The current beam may be determined by the receive end device within a sweep period previous to a current sweep period through beam matching. For a process of performing beam matching by the receive end device, refer to the descriptions in the implementation environment shown in FIG. 1. Details are not described herein again. For example, the transmit end device may be the base station 01 in the implementation environment shown in FIG. 1, the receive end device may be the UE-02 in the implementation environment shown in FIG. 1, the current beam may be the beam C, and the base station 01 may send the DMRS to the UE-02 by using the beam C.

It should be noted that, during actual application, when sending the DMRS to the receive end device, the transmit end device may perform precoding on the DMRS by using a precoding vector, to obtain a plurality of precoding DMRSs. The DMRSs may be used for data demodulation, and this is because during actual application, the DMRSs are mapped one-to-one to symbol flows of the transmit end device (in other words, each symbol flow corresponds to one DMRS, and the symbol flow is also referred to as a spatial flow or a spatial layer). Therefore, a quantity of DMRSs is usually equal to a quantity of symbol flows. When sending a symbol flow to the receive end device, the transmit end device may perform precoding on the symbol flow by using a precoding vector, to obtain a plurality of precoded data flows, and send the plurality of precoded data flows to the receive end device. The precoding vector used to perform precoding on the symbol flow is the same as a precoding vector used to perform precoding on a DMRS corresponding to the symbol flow. In this way, the receive end device may estimate an equivalent channel based on the DMRS, and obtain a symbol flow through demodulation based on the equivalent channel.

In this embodiment of this application, a DMRS may not only be used for the data demodulation, but also may be used to determine whether the beam deviation occurs. Therefore, the DMRS may be re-used, improving use efficiency of the DMRS.

Step 302: The receive end device receives the DMRS sent by the transmit end device.

When the transmit end device sends the DMRS to the receive end device, the receive end device may receive the DMRS sent by the transmit end device.

Step 303: The receive end device determines, based on the DMRS, whether a beam deviation occurs.

After receiving the DMRS sent by the transmit end device, the receive end device may determine, based on the DMRS sent by the transmit end device, whether the beam deviation occurs. Optionally, FIG. 3-2 is a flowchart of a method of determining, by a receive end device based on a DMRS, whether a beam deviation occurs according to the embodiment shown in FIG. 3-1. Referring to FIG. 3-2, the method may include the following steps.

Sub-step 3031: The receive end device determines received signal quality based on the DMRS.

The receive end device may determine the received signal quality based on the DMRS. The received signal quality may be *^{gdmrs}.* A representation parameter of the received signal quality may include: at least one of signal receiving power, a signal to interference plus noise ratio, and a signal-to-noise ratio. In other words, the receive end device may calculate the at least one of the signal receiving power, the signal to interference plus noise ratio, and the signal-to-noise ratio based on the DMRS. For a specific implementation process in which the receive end device calculates the signal receiving power, the signal to interference plus noise ratio, and the signal-to-noise ratio based on the DMRS, refer to the prior art. Details are not described herein again in this embodiment of this application.

Sub-step 3032: The receive end device determines, when the received signal quality is less than a preset quality threshold, that the beam deviation occurs.

After calculating the received signal quality, the receive end device may determine whether the received signal quality is less than the preset quality threshold. The preset quality threshold may be *^{gthreshold}* . The preset quality threshold may be used to measure the received signal quality. When the received signal quality is less than the preset quality threshold, it indicates that the received signal quality is not good enough, and indicates that the beam deviation occurs. When the received signal quality is not less than the preset quality threshold, it indicates that the received signal quality is relatively good, and indicates that no beam deviation occurs.

The preset quality threshold may be preset, or the preset quality threshold may be pre-agreed on by the transmit end device and the receive end device, or the preset quality threshold may be received signal quality corresponding to an optimal beam determined by the receive end device through beam matching. The optimal beam is a beam on which the receive end device is located, or the optimal beam may be understood as a beam whose beam direction points to the receive end device. For example, the transmit end device may be the base station 01 in the implementation environment shown in FIG. 1, and the receive end device may be the UE-02 in the implementation environment shown in FIG. 1. Because the UE-02 is located within the coverage of the beam C, the preset quality threshold may be received signal quality corresponding to the beam C in the implementation environment shown in FIG. 1. This is not limited in this embodiment of this application.

In this embodiment of this application, the receive end device may compare the received signal quality *g_{dmrs}* with the preset quality threshold *g_{threshold}* , to determine whether the received signal quality *g_{dmrs}* is less than the preset quality threshold *g_{threshold}* . If *g_{dmrs}* < *g_{threshold}* , the receive end device determines that the beam deviation occurs. For example, it is assumed that *g_{dmrs}* = 5 and *g_{threshold}* = 10 . Because 5 is less than 10, *g_{dmrs} < g_{threshold}* and the receive end device determines that the beam deviation occurs.

For example, FIG. 3-3 is a schematic diagram in which a beam deviation occurs according to the embodiment shown in FIG. 3-1. It is assumed that the UE-02 is previously located within the coverage of the beam C, UE-03 is located within a coverage of the beam A, and UE-04 is located within a coverage of the beam F. Referring to FIG. 3-3, the UE-02 is currently located within the coverage of the beam C, the UE-03 is still located within the coverage of the beam A, and the UE-04 is still located within the coverage of the beam F. Therefore, a beam deviation occurs on the UE-02, and no beam deviation occurs on the UE-03 and the UE-04.

Sub-step 3033: The receive end device determines, when the received signal quality is not less than a preset quality threshold, that no beam deviation occurs.

It can be learned based on the description of sub-step 3032 that, when the received signal quality is not less than the preset quality threshold, it indicates that the received signal quality is relatively good, and indicates that no beam deviation occurs. Therefore, when the received signal quality is not less than the preset quality threshold, the receive end device determines that no beam deviation occurs.

In this embodiment of this application, the receive end device may compare the received signal quality *g_{dmrs}* with the preset quality threshold *g_{threshold}* , to determine whether the received signal quality *g_{dmrs}* is less than the preset quality threshold *g_{threshold}*. If *g_{dmrs}* ≥ *g_{threshold}* , the receive end device determines that no beam deviation occurs. For example, it is assumed that *g_{dmrs}* = 12 and *g_{threshold}* =10 . Because 12 is greater than 10, *g_{dmrs}* > *g_{threshold}* and the receive end device determines that no beam deviation occurs.

For example, FIG. 3-4 is a schematic diagram in which no beam deviation occurs according to the embodiment shown in FIG. 3-1. It is assumed that the UE-02 is previously located within the coverage of the beam C, UE-03 is located within a coverage of the beam A, and UE-04 is located within a coverage of the beam F. Referring to FIG. 3-4, the UE-02 is currently located within the coverage of the beam C, the UE-03 is still located within the coverage of the beam A, and the UE-04 is still located within the coverage of the beam F. Therefore, no beam deviation occurs on the UE-02, the UE-03, and the UE-04.

Step 304: The receive end device feeds back an updated beam to the transmit end device when determining that the beam deviation occurs.

In step 303, if the receive end device determines that the beam deviation occurs, the receive end device may feed back the updated beam to the transmit end device, to enable the transmit end device to send data to the receive end device by using the updated beam. Optionally, FIG. 3-5 is a flowchart of a method of feeding back, by a receive end device, an updated beam to a transmit end device according to the embodiment shown in FIG. 3-1. Referring to FIG. 3-5, the method may include the following steps.

Sub-step 3041A: The receive end device determines, when the transmit end device performs beam sweeping, the updated beam by performing beam matching.

The transmit end device may periodically perform beam sweeping. When the transmit end device performs beam sweeping, the receive end device may determine the updated beam by performing beam matching. A sweep mode of the transmit end device may be a periodic sweep mode or a semi-persistent sweep mode. In the periodic sweep mode, the transmit end device performs beam sweeping once within each sweep period, and continues like this forever. In the semi-persistent sweep mode, the transmit end device performs beam sweeping once within each sweep period, but performs only a limited quantity of times of beam sweeping. In other words, total duration of all sweep periods in the periodic sweep mode is not limited, but total duration of all sweep periods in the semi-persistent sweep mode is limited (in other words, the semi-persistent sweep mode is a periodic sweep mode with a limited time). Specific descriptions of the periodic sweep mode and the semi-persistent sweep mode are already described in detail in the prior art, and a beam sweeping process is already clearly described in the implementation environment shown in FIG. 1. Details are not described herein again in this embodiment of this application. For example, FIG. 3-6 is a flowchart of a method of determining, by a receive end device, an updated beam according to the embodiment shown in FIG. 3-1. Referring to FIG. 3-6, the method may include the following steps.

Sub-step 3041A1: When the transmit end device performs beam sweeping, the receive end device receives an RS sent by the transmit end device by using each of a plurality of beams.

A process of performing beam sweeping by the transmit end device is a process of transmitting, by the transmit end device, the reference signal (English: Reference Signal, RS) to the receive end device based on a preset sequence by using each of the plurality of beams. The RS may be a CSI-RS or any RS that may be used for beam management. This is not limited in this embodiment of this application.

When the transmit end device performs beam sweeping, the receive end device may receive the RS sent by the transmit end device by using each of the plurality of beams. For example, using the implementation environment shown in FIG. 1 as an example, and using an example in which the transmit end device is the base station 01 and the receive end device is the UE-02, the base station 01 may send an RS to the UE-02 based on a preset sequence (such as the sequence of A-D-B-E-C-F) by using each of the six beams, namely, the beams A to F, and the UE-02 may receive the RS sent by the base station 01 by using each of the six beams, namely, the beams A to F. In this embodiment of this application, it is assumed that an RS received by the UE-02 by using the beam A is an RS 1, an RS received by using the beam B is an RS 2, an RS received by using the beam C is an RS 3, an RS received by using the beam D is an RS 4, an RS received by using the beam E is an RS 5, and an RS received by using the beam F is an RS 6. It should be noted that, for a process of receiving, by the receive end device, the RS sent by the transmit end device by using each of the plurality of beams, refer to the prior art. Details are not described herein again in this embodiment of this application.

As described in the foregoing, the transmit end device may periodically perform beam sweeping, or may perform beam sweeping based on the semi-persistent sweep mode. Therefore, when determining the beam deviation, the receive end device may receive, when the transmit end device performs periodic beam sweeping or performs beam sweeping based on the semi-persistent sweep mode, the RS sent by the transmit end device by using each of the plurality of beams. However, when determining the beam deviation, the receive end device may alternatively actively instruct the transmit end device to immediately perform beam sweeping, without being limited by the periodic or semi-persistent sweep mode. During a specific implementation process, the receive end device may instruct, by using various notification manners, the transmit end device to perform beam sweeping, for example, but not limited to, actively instruct, by using an uplink resource allocated by the transmit end device to the receive end device, the transmit end device to perform beam sweeping. In addition, when determining, based on the DMRS, that a degree to which the received signal quality is less than the preset quality threshold exceeds a preset threshold, the receive end device may alternatively actively instruct the transmit end device to perform beam sweeping. This is described in detail in the following.

Sub-step 3041A2: The receive end device separately calculates a signal quality measure based on each of a plurality of RSs, to obtain a plurality of signal quality measures.

In this embodiment of this application, the signal quality measure is the received signal quality. A representation parameter of the signal quality measure may also include the at least one of the signal receiving power, the signal to interference plus noise ratio, and the signal-to-noise ratio. For a specific implementation process of calculating, by the receive end device, the at least one of the signal receiving power, the signal to interference plus noise ratio, and the signal-to-noise ratio based on the received RS, refer to the prior art. Details are not described herein again in this embodiment of this application.

In this embodiment of this application, it is assumed that, a signal quality measure calculated by the receive end device based on the RS 1 is *^{g}*1, a signal quality measure calculated based on the RS 2 is *^{g}*2, a signal quality measure calculated based on the RS 3 is *^{g}*3, a signal quality measure calculated based on the RS 4 is *g*₄, a signal quality measure calculated based on the RS 5 is *g*₅, and a signal quality measure calculated based on the RS 6 is *g*₆ .

Sub-step 3041A3: The receive end device determines, as the updated beam, a beam corresponding to a largest signal quality measure in the plurality of signal quality measures.

Optionally, the receive end device may sort the plurality of calculated signal quality measures in descending order, determine the largest signal quality measure in the plurality of signal quality measures based on a sorting result, determine the beam corresponding to the largest signal quality measure, and determine the largest signal quality measure as the updated beam.

For example, a sorting sequence obtained by the receive end device by sorting the signal quality measures *g*₁ , *g*₂ , *g₃* , *g*₄ , *g*₅ , and *g*₆ in descending order is *g*₄ > *g*₃ > *g*₅ > *g*₂ > *g*₆ > *g*₁, and then the receive end device may determine that the largest signal quality measure is *g*₄. Because a beam corresponding to *g*₄ is the beam D, the receive end device determines the beam D as the updated beam.

It should be noted that, in this embodiment of this application, if the preset quality threshold in step 3032 is received signal quality corresponding to the optimal beam determined by the receive end device through beam matching, the preset quality threshold may alternatively be the signal quality measure *^{g}*4, and *^{g}*4 may also be referred to as a signal quality measure corresponding to a candidate beam. Therefore, *g*₄ may alternatively be *g_{candidate}*, the candidate beam is a candidate beam for a current beam, the current beam is a beam used by the transmit end device to transmit a DMRS, and *g_{candidate}* is received signal quality corresponding to the candidate beam.

It should be further noted that, this embodiment of this application is described by using an example in which the receive end device calculates the signal quality measure based on each of the plurality of RSs, to obtain the plurality of signal quality measures, and determines, as the updated beam, the beam corresponding to the largest signal quality measure in the plurality of signal quality measures. During actual application, the receive end device may calculate a signal quality measure based on an RS, and compare the calculated signal quality measure with the preset quality threshold, to determine whether the signal quality measure is greater than the preset quality threshold. If the signal quality measure is greater than the preset quality threshold, the receive end device determines, as the updated beam, a beam corresponding to a sweep signal whose signal quality measure is greater than the preset quality threshold, and a process of calculating the signal quality measure does not continue to be performed. In other words, the receive end device may successively calculate signal quality measures corresponding to RSs, and when finding an RS whose signal quality measure is greater than the preset quality threshold, determine, as the updated beam, a beam corresponding to a sweep signal corresponding to the RS, and no longer calculate signal quality measures corresponding to the other RSs. This is not limited in this embodiment of this application.

Sub-step 3042A: The receive end device feeds back the updated beam to the transmit end device.

After determining the updated beam, the receive end device may feed back the updated beam to the transmit end device. For example, the receive end device feeds back the beam D to the transmit end device. Optionally, the receive end device may feed back, to the transmit end device, a beam identifier used to indicate the updated beam. Alternatively, during actual application, each beam may correspond to one RS resource, and the receive end device may feed back, to the transmit end device, a resource identifier used to indicate an RS resource corresponding to the updated beam. The corresponding beam is indicated by using the resource identifier of the RS resource. The RS resource may include an RS port, an RS sequence, or the like. In the LTE standard, the RS port may be a CSI-RS port, the beam identifier may be a beam number, and the resource identifier may be a resource label, for example, but not limited to, a CSI-RS port number.

It should be noted that, the receive end device may feed back the updated beam to the transmit end device by using corresponding signaling. For example, when the receive end device is UE and the transmit end device is a base station, the receive end device may feed back the updated beam to the transmit end device by using uplink signaling. When the receive end device is a base station and the transmit end device is UE, the receive end device may feed back the updated beam to the transmit end device by using downlink signaling. Details are not described herein again in this embodiment of this application.

Optionally, FIG. 3-7 is a flowchart of another method of feeding back, by a receive end device, an updated beam to a transmit end device according to the embodiment shown in FIG. 3-1. Referring to FIG. 3-7, the method may include the following steps.

Sub-step 3041B: The receive end device determines received signal quality based on the DMRS.

The received signal quality may be *g_{dmrs}.* For a specific implementation process of sub-step 3041B, refer to sub-step 3031. Details are not described herein again in this embodiment of this application.

Sub-step 3042B: When a degree to which the received signal quality is less than the preset quality threshold exceeds a preset threshold, the receive end device instructs the transmit end device to perform beam sweeping.

After calculating the received signal quality, the receive end device may determine whether the degree to which the received signal quality is less than the preset quality threshold exceeds the preset threshold. The degree to which the received signal quality is less than the preset quality threshold may be represented by using an absolute value of a difference between the received signal quality and the preset quality threshold. The preset threshold may be *G_{threshold}*, and the preset threshold may be used to measure the degree to which the received signal quality is less than the preset quality threshold. When the degree to which the received signal quality is less than the preset quality threshold exceeds the preset threshold, it indicates that the degree to which the received signal quality is less than the preset quality threshold is relatively large, and indicates that the received signal quality is relatively significantly reduced and the current beam may be not applicable to communication between the transmit end device and the receive end device, and beam switching needs to be immediately performed. In this case, the receive end device may instruct the transmit end device to perform beam sweeping, to immediately perform the beam switching. When the degree to which the received signal quality is less than the preset quality threshold does not exceed the preset threshold, it indicates that the degree to which the received signal quality is less than the preset quality threshold is relatively small, and indicates that the received signal quality is not relatively significantly reduced and the receive end device may feed back the updated beam when the beam sweeping is performed. In this case, the receive end device does not need to instruct the transmit end device to perform beam sweeping. The preset threshold may be preset, or the preset threshold may be pre-agreed on by the transmit end device and the receive end device. This is not limited in this embodiment of this application.

In this embodiment of this application, the preset quality threshold may be *g_{threshold}*. The receive end device may compare the absolute value of the difference between the received signal quality *^{g}_{dmrs}* and the preset quality threshold *^{g}_{threshold}* with the preset threshold *G_{threshold}*, to determine whether the degree to which the received signal quality *g_{dmrs}* is less than the preset quality threshold *g_{threshold}* exceeds the preset threshold. If |*g_{dmrs}* ―*g_{threshold}* |>*G_{threshold}*, the receive end device determines that the degree to which the received signal quality *^{g}_{dmrs}* is less than the preset quality threshold *^{gthreshold}* exceeds the preset threshold, and the receive end device instructs the transmit end device to perform beam sweeping. If |*g_{dmrs}* - *g_{threshold}* |≤ *G_{threshold}*, the receive end device determines that the degree to which the received signal quality *^{g}_{dmrs}* is less than the preset quality threshold *^{g}_{threshold}* does not exceed the preset threshold, and the receive end device does not instruct the transmit end device to perform beam sweeping. || indicates calculating the absolute value.

Optionally, in this embodiment of this application, the receive end device may send trigger information to the transmit end device to instruct the transmit end device to perform beam sweeping. There may be a variety of trigger information, and the trigger information may be pre-agreed on by the transmit end device and the receive end device. The receive end device may send the trigger information to the transmit end device by using corresponding signaling. For example, when the receive end device is UE and the transmit end device is a base station, the receive end device may send the trigger information to the transmit end device by using uplink signaling. When the receive end device is a base station and the transmit end device is UE, the receive end device may send the trigger information to the transmit end device by using downlink signaling. Details are not described herein in this embodiment of this application.

Sub-step 3043B: The receive end device determines, when the transmit end device performs beam sweeping, the updated beam by performing beam matching.

For a specific implementation process of sub-step 3043B, refer to sub-step 3041A. Details are not described herein again in this embodiment of this application.

Sub-step 3044B: The receive end device feeds back the updated beam to the transmit end device.

For a specific implementation process of sub-step 3044B, refer to sub-step 3042A. Details are not described herein again in this embodiment of this application.

Step 305: The transmit end device receives the updated beam fed back by the receive end device.

When the receive end device feeds back the updated beam to the transmit end device, the transmit end device may be based on the updated beam fed back by the receive end device. The updated beam is fed back by the receive end device when the receive end device determines, based on the DMRS, that the beam deviation occurs.

Optionally, when the receive end device feeds back, to the transmit end device, the beam identifier used to indicate the updated beam, the transmit end device may determine the updated beam based on the beam identifier. When the receive end device feeds back, to the transmit end device, the resource identifier used to indicate the RS resource corresponding to the updated beam, the transmit end device may determine the corresponding RS resource based on the resource identifier, and determine the updated beam based on the RS resource. The RS resource may include an RS port, an RS sequence, or the like. In the LTE standard, the RS port may be a CSI-RS port, the beam identifier may be a beam number, and the resource identifier may be a resource label, for example, but not limited to, a CSI-RS port number. In this embodiment of this application, for the implementation environment shown in FIG. 1, the updated beam may be the beam D.

Step 306: The transmit end device performs data transmission with the receive end device by using the updated beam.

After determining the updated beam, the transmit end device may perform data transmission with the receive end device by using the updated beam. For example, the transmit end device (the base station 01) performs data transmission with the receive end device (the UE-02) by using the beam D. Details are not described herein in this embodiment of this application.

Step 307: The receive end device feeds back indication information to the transmit end device when determining that no beam deviation occurs, where the indication information is used to indicate that no beam deviation occurs.

In step 303, if the receive end device determines that no beam deviation occurs, the receive end device may feed back the indication information to the transmit end device, where the indication information is used to indicate that no beam deviation occurs, to enable the transmit end device to send data to the receive end device by using the current beam. The indication information may be pre-agreed on by the transmit end device and the receive end device, and a size of the indication information may be one bit (bit).

It should be noted that, in this embodiment of this application, a feedback mode of the receive end device includes a periodic feedback mode and a non-periodic feedback mode. In the periodic feedback mode, when determining that no beam deviation occurs, the receive end device does not need to immediately feed back the indication information to the transmit end device, and only needs to feed back the indication information to the transmit end device within a current feedback period. Duration of a feedback period of the periodic feedback mode of the receive end device is equal to duration of the sweep period of the transmit end device, and the sweep period and the feedback period are a same period. The periodic feedback mode of the receive end device may be applicable to both the periodic sweep mode and the semi-persistent sweep mode of the transmit end device. Details are not described herein in this embodiment of this application.

Step 308: The transmit end device receives the indication information fed back by the receive end device.

When the receive end device feeds back the indication information to the transmit end device, the transmit end device may receive the indication information fed back by the receive end device. The indication information is used to indicate that no beam deviation occurs. The indication information may be pre-agreed on by the transmit end device and the receive end device, and the size of the indication information may be one bit. Details are not described herein in this embodiment of this application.

Step 309: The transmit end device performs data transmission with the receive end device by using a current beam.

After the transmit end device receives the indication information fed back by the receive end device, because the indication information is used to indicate that no beam deviation occurs, the transmit end device may perform data transmission with the receive end device by using the current beam. For example, the transmit end device (the base station 01) performs data transmission with the receive end device (the UE-02) by using the beam C. Details are not described herein in this embodiment of this application.

Step 310: The receive end device feeds back no information to the transmit end device when determining that no beam deviation occurs.

It can be learned from the description of step 307 that, the feedback mode of the receive end device may include the periodic feedback mode and the non-periodic feedback mode. When the feedback mode of the receive end device is the non-periodic feedback mode, if the receive end device determines that no beam deviation occurs in step 303, the receive end device may feed back no information to the transmit end device. In this way, feedback overheads may be reduced.

It should be noted that, in this embodiment of this application, step 301 to step 306 may be implemented as a solution of this application. Step 301 to step 303 and 307 to step 309 may be implemented as another solution of this application. Step 301 to step 303 and step 310 may be implemented as still another solution of this application. The three solutions are three parallel solutions provided in this embodiment of this application.

In other words, the embodiment shown in FIG. 3-1 can reflect the three parallel solutions. For ease of description, the three parallel solutions are described in combination in this embodiment of this application. However, a person skilled in the art should be aware that, during actual application, the three parallel solutions should be three solutions that are mutually exclusive within a same period of time. Only one of the three solutions should be performed. Details are not described herein in this embodiment of this application.

In summary, according to the method provided in this embodiment of this application, the receive end device feeds back the updated beam to the transmit end device when determining, based on the DMRS, that the beam deviation occurs, and the updated beam is usually the optimal beam. Therefore, the method helps resolve a problem in the prior art that accuracy for determining the optimal beam is relatively low, and improve the accuracy for determining the optimal beam.

According to the method provided in this embodiment of this application, the DMRS may not only be used for the data demodulation, but also may be used to determine whether the beam deviation occurs, so that the DMRS may be re-used, improving the use efficiency of the DMRS.

According to the method provided in this embodiment of this application, when the degree to which the received signal quality is less than the preset quality threshold exceeds the preset threshold, the transmit end device is instructed to perform beam sweeping, so that the transmit end device and the receive end device can conveniently update the beam in time, ensuring normal communication.

With development of communications technologies, an LTE-A (that has a popular name: 4G) communications system is already deployed in a plurality of countries and regions. Compared with a third generation (English: Third Generation, 3G for short) communications system, the LTE-A communications system can enable a user to obtain a higher communication rate and better communication experience. However, the LTE-A communications system is not a finish line of mobile communication, and research and development of a fifth generation (English: Fifth Generation, 5G for short) communications system are being vigorously carried out throughout the world. A large-scale multiple input multiple output (English: Multiple Input Multiple Output, MIMO for short) technology and a high-frequency-band transmission technology gain huge attention in 5G research, and a beam tracking problem is a key problem for high-frequency-band and large-scale MIMO.

In the prior art, when beam tracking is performed, within each sweep period, a base station may send a CSI-RS to UE. The CSI-RS is used by the UE to measure signal receiving quality of a downlink channel. The UE may determine, based on the measured signal receiving quality, a beam on which the UE is located, and feed back the beam on which the UE is located to the base station, so that the base station performs UE beam management (performs beam switching for the UE). In an existing beam tracking method, the beam tracking is performed by using only the CSI-RS, and because within each sweep period, the UE needs to feed back the beam on which the UE is located to the base station, the accuracy for determining the optimal beam is relatively low and the feedback overheads are relatively large. In embodiments of this application, the beam tracking is performed by using both a DMRS and an RS. The UE may determine, based on the DMRS, whether the beam deviation occurs. The UE feeds back the beam on which the UE is located to the base station only when the beam deviation occurs. Otherwise, the UE does not perform the feedback. Therefore, the accuracy for determining the optimal beam can be improved, and the feedback overheads can be reduced.

The following is device embodiments of this application. The device embodiments may be used to perform the method embodiments of this application. For details not disclosed in the device embodiments of this application, refer to the method embodiments of this application.

FIG. 4-1 is a block diagram of a receive end device 400 according to an embodiment of this application. The receive end device 400 may be implemented, by using software, hardware, or a combination of software and hardware, as a part of or an entirety of the UE-02 in the implementation environment shown in FIG. 1. Referring to FIG. 4-1, the receive end device 400 may include but is not limited to:
a receiving module 410, configured to receive a demodulation reference signal DMRS sent by a transmit end device; and
a first feedback module 420, configured to feed back an updated beam to the transmit end device when determining, based on the DMRS, that a beam deviation occurs.

Optionally, FIG. 4-2 is a block diagram of a first feedback module 420 according to the embodiment shown in FIG. 4-1. Referring to FIG. 4-2, the first feedback module 420 specifically includes:
a first determining unit 4201A, configured to determine received signal quality based on the DMRS; and
a second determining unit 4202A, configured to determine, when the received signal quality is less than a preset quality threshold, that the beam deviation occurs.

Further, the first feedback module 420 specifically further includes:
a first matching unit 4203A, configured to determine, when the transmit end device performs beam sweeping, the updated beam by performing beam matching; and
a first feedback unit 4204A, configured to feed back the updated beam to the transmit end device.

Optionally, FIG. 4-3 is a block diagram of another first feedback module 420 according to the embodiment shown in FIG. 4-1. Referring to FIG. 4-3, the first feedback module 420 specifically includes:
a third determining unit 4201B, configured to determine received signal quality based on the DMRS;
a notification unit 4202B, configured to instruct, when a degree to which the received signal quality is less than a preset quality threshold exceeds a preset threshold, the transmit end device to perform beam sweeping;
a second matching unit 4203B, configured to determine, when the transmit end device performs beam sweeping, the updated beam by performing beam matching; and
a second feedback unit 4204B, configured to feed back the updated beam to the transmit end device.

Optionally, FIG. 4-4 is a block diagram of another receive end device 400 according to an embodiment of this application. Referring to FIG. 4-4, based on FIG. 4-1, the receive end device 400 further includes:
a second feedback module 430, configured to feed back indication information to the transmit end device when determining, based on the DMRS, that no beam deviation occurs, where the indication information is used to indicate that no beam deviation occurs.

Optionally, the receive end device 400 further includes:
a retaining module 440, configured to feed back no information to the transmit end device when determining, based on the DMRS, that no beam deviation occurs.

Optionally, the first matching unit 4203A or the second matching unit 4203B is specifically configured to:
receive, when the transmit end device performs beam sweeping, reference information RS sent by the transmit end device by using each of a plurality of beams; separately calculate a signal quality measure based on each of a plurality of RSs, to obtain a plurality of signal quality measures; and determine, as the updated beam, a beam corresponding to a largest signal quality measure in the plurality of signal quality measures.

Optionally, a representation parameter of the received signal quality includes at least one of signal receiving power, a signal to interference plus noise ratio, and a signal-to-noise ratio.

In summary, according to the receive end device provided in this embodiment of this application, the receive end device feeds back the updated beam to the transmit end device when determining, based on the DMRS, that the beam deviation occurs, and the updated beam is usually an optimal beam. Therefore, the receive end device helps resolve a problem in the prior art that accuracy for determining the optimal beam is relatively low, and improve the accuracy for determining the optimal beam.

FIG. 5-1 is a block diagram of a transmit end device 500 according to an embodiment of this application. The transmit end device 500 may be implemented, by using software, hardware, or a combination of software and hardware, as a part of or an entirety of the base station 01 in the implementation environment shown in FIG. 1. Referring to FIG. 5-1, the transmit end device 500 may include but is not limited to:
a first sending module 510, configured to send a demodulation reference signal DMRS to a receive end device; and
a first receiving module 520, configured to receive an updated beam fed back by the receive end device, where the updated beam is fed back by the receive end device when the receive end device determines, based on the DMRS, that a beam deviation occurs.

Optionally, FIG. 5-2 is a block diagram of another transmit end device 500 according to an embodiment of this application. Referring to FIG. 5-2, based on FIG. 5-1, the transmit end device 500 further includes:
a sweep module 530, configured to perform beam sweeping based on a notification from the receive end device.

Optionally, still referring to FIG. 5-2, the transmit end device 500 further includes:
a second receiving module 540, configured to receive indication information fed back by the receive end device, where indication information is fed back by the receive end device when the receive end device determines, based on the DMRS, that no beam deviation occurs, and the indication information is used to indicate that no beam deviation occurs.

Optionally, the updated beam is determined by the receive end device by performing beam matching when the transmit end device performs beam sweeping, where the beam sweeping is actively initiated by the transmit end device, or the beam sweeping is initiated by the transmit end device based on the notification from the receive end device. The transmit end device 500 further includes:
a second sending module 550, configured to send reference information RS to the receive end device by using each of a plurality of beams.

In summary, according to the transmit end device provided in this embodiment of this application, the updated beam is fed back by the receive end device when the receive end device determines, based on the DMRS, that the beam deviation occurs, and the updated beam is usually an optimal beam. Therefore, the transmit end device helps resolve a problem in the prior art that accuracy for determining the optimal beam is relatively low, and improve the accuracy for determining the optimal beam.

It should be noted that, when the receive end device and the transmit end device that are provided in the foregoing embodiments perform beam tracking, the descriptions are provided by using division of the functional modules merely as an example. During actual application, based on a requirement, different functional modules may be assigned to perform the functions. In other words, internal structures of the devices are divided into different functional modules, to perform all or some of the functions described in the foregoing. In addition, the transmit end device and the receive end device that are provided in the foregoing embodiments and the beam tracking method embodiment have a same conception. For details about specific implementation processes of the transmit end device and the receive end device, refer to the method embodiments. Details are not described herein again.

FIG. 6 is a block diagram of a receive end device 600 according to an embodiment of this application. The receive end device 600 may be the UE-02 in the implementation environment shown in FIG. 1, and is configured to perform a part of the method provided in the embodiment shown in FIG. 3-1 and the complete method provided in the embodiment shown in FIG. 2. Referring to FIG. 6, the receive end device 600 may include: a receiver 610 and a processor 620. The receiver 610 is connected to the processor 620 by using a bus 630.

The processor 620 includes one or more processing cores. The processor 620 runs a software program and a unit, to perform various function application and data processing.

Optionally, as shown in FIG. 6, the receive end device 600 further includes: a memory 640, a network interface 650, and a transmitter 660. The memory 640, the network interface 650, and the transmitter 660 are respectively connected to the receiver 610 and the processor 620 by using the bus 630.

There may be a plurality of network interfaces 650. The network interface 650 is used by the receive end device 600 to communicate with another storage device or network device. The network interface 650 is optional. During actual application, the receive end device 600 may communicate with another storage device or network device by using the receiver 610. Therefore, there may be no network interface in the receive end device 600. This is not limited in this embodiment of this application.

The receiver 610 is configured to receive a demodulation reference signal DMRS sent by a transmit end device.

The processor 620 is configured to feed back an updated beam to the transmit end device when determining, based on the DMRS, that a beam deviation occurs.

Optionally, the processor 620 is specifically configured to: determine received signal quality based on the DMRS; and determine, when the received signal quality is less than a preset quality threshold, that the beam deviation occurs.

Optionally, the processor 620 is specifically configured to: determine, when the transmit end device performs beam sweeping, the updated beam by performing beam matching; and feed back the updated beam to the transmit end device.

Optionally, the processor 620 is specifically configured to: determine received signal quality based on the DMRS; instruct, when a degree to which the received signal quality is less than a preset quality threshold exceeds a preset threshold, the transmit end device to perform beam sweeping; determine, when the transmit end device performs beam sweeping, the updated beam by performing beam matching; and feed back the updated beam to the transmit end device.

Optionally, the processor 620 is further configured to feed back indication information to the transmit end device when determining, based on the DMRS, that no beam deviation occurs, where the indication information is used to indicate that no beam deviation occurs.

Optionally, the processor 620 is further configured to feed back no information to the transmit end device when determining, based on the DMRS, that no beam deviation occurs.

Optionally, the processor 620 is specifically configured to: receive, when the transmit end device performs beam sweeping, reference information RS sent by the transmit end device by using each of a plurality of beams; separately calculate a signal quality measure based on each of a plurality of RSs, to obtain a plurality of signal quality measures; and determine, as the updated beam, a beam corresponding to a largest signal quality measure in the plurality of signal quality measures.

Optionally, a representation parameter of the received signal quality includes at least one of signal receiving power, a signal to interference plus noise ratio, and a signal-to-noise ratio.

In summary, according to the receive end device provided in this embodiment of this application, the receive end device feeds back the updated beam to the transmit end device when determining, based on the DMRS, that the beam deviation occurs, and the updated beam is usually an optimal beam. Therefore, the receive end device helps resolve a problem in the prior art that accuracy for determining the optimal beam is relatively low, and improve the accuracy for determining the optimal beam.

FIG. 7 is a block diagram of a transmit end device 700 according to an embodiment of this application. The transmit end device 700 may be the base station 01 in the implementation environment shown in FIG. 1, and is configured to perform a part of the method provided in the embodiment shown in FIG. 3-1. Referring to FIG. 7, the transmit end device 700 may include: a transmitter 710 and a processor 720. The transmitter 710 is connected to the processor 720 by using a bus 730.

The processor 720 includes one or more processing cores. The processor 720 runs a software program and a unit, to perform various function application and data processing.

Optionally, as shown in FIG. 7, the transmit end device 700 further includes: a memory 740 and a network interface 750. The memory 740 and the network interface 750 are respectively connected to the receiver 710 and the processor 720 by using the bus 730.

There may be a plurality of network interfaces 750. The network interface 750 is used by the transmit end device 700 to communicate with another storage device or network device. The network interface 750 is optional. During actual application, the transmit end device 700 may communicate with another storage device or network device by using the receiver 710. Therefore, there may be no network interface in the transmit end device 700. This is not limited in this embodiment of this application.

The transmitter 710 is configured to send a demodulation reference signal DMRS to a receive end device.

The processor 720 is configured to receive an updated beam fed back by the receive end device, where the updated beam is fed back by the receive end device when the receive end device determines, based on the DMRS, that a beam deviation occurs.

Optionally, the processor 720 is configured to perform beam sweeping based on a notification from the receive end device.

Optionally, the transmit end device 700 further includes: a receiver 760. The receiver 760 is connected to the transmitter 710, the processor 720, the memory 740, and the network interface 750 by using the bus 730.

The receiver 760 is configured to receive indication information fed back by the receive end device, where indication information is fed back by the receive end device when the receive end device determines, based on the DMRS, that no beam deviation occurs, and the indication information is used to indicate that no beam deviation occurs.

Optionally, the updated beam is determined by the receive end device by performing beam matching when the transmit end device performs beam sweeping, where the beam sweeping is actively initiated by the transmit end device, or the beam sweeping is initiated by the transmit end device based on the notification from the receive end device. The transmitter 710 is further configured to send reference information RS to the receive end device by using each of a plurality of beams.

In summary, according to the transmit end device provided in this embodiment of this application, the updated beam is sent by the receive end device to the transmit end device when the beam deviation occurs. Therefore, a problem in the prior art that feedback overheads are relatively large in the beam tracking method is resolved, and the feedback overheads are reduced.

FIG. 8 is a schematic structural diagram of a beam-tracing system 800 according to an embodiment of this application. Referring to FIG. 8, the beam-tracing system 800 may include: a transmit end device 810 and a receive end device 820.

In a possible implementation, the transmit end device 810 is the transmit end device 500 shown in FIG. 5-1 or FIG. 5-2. The receive end device 820 is the receive end device 400 shown in FIG. 4-1 or FIG. 4-4.

In another possible implementation, the transmit end device 810 is the transmit end device 700 shown in 7. The receive end device 820 is the receive end device 600 shown in FIG. 6.

In summary, according to the beam-tracing system provided in this embodiment of this application, the receive end device feeds back the updated beam to the transmit end device when determining, based on the DMRS, that the beam deviation occurs, and the updated beam is usually an optimal beam. Therefore, the beam-tracing system helps resolve a problem in the prior art that accuracy for determining the optimal beam is relatively low, and improve the accuracy for determining the optimal beam.

An embodiment of this application further provides a computer readable storage medium. The computer readable storage medium stores an instruction, and when being run on a computer, the computer readable storage medium enables the computer to perform a related step in the beam tracking method provided in the embodiment shown in FIG. 2 and the beam tracking method provided in the embodiment shown in FIG. 3-1.

An embodiment of this application further provides a computer readable storage medium. The computer readable storage medium stores an instruction, and when being run on a computer, the computer readable storage medium enables the computer to perform a related step in the beam tracking method provided in the embodiment shown in FIG. 3-1.

An embodiment of this application further provides a computer program product including an instruction. When being run on a computer, the computer program product enables the computer to perform a related step in the beam tracking method provided in the embodiment shown in FIG. 2 and the beam tracking method provided in the embodiment shown in FIG. 3-1.

An embodiment of this application further provides a computer program product including an instruction. When being run on a computer, the computer program product enables the computer to perform a related step in the beam tracking method provided in the embodiment shown in FIG. 3-1.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely optional embodiments of this application, but are not intended to limit this application. The scope of the invention is defined by the appended set of claims.

## Claims

1. A beam tracking method performed by a receive end device, wherein the method comprises:
receiving (201, 302) a demodulation reference signal DMRS sent by a transmit end device; and
feeding (202, 304) back an updated beam to the transmit end device when determining, based on the DMRS, that a beam deviation occurs;
**characterized by** further comprising:
feeding (307) back indication information to the transmit end device when determining, based on the DMRS, that no beam deviation occurs, wherein the indication information is used to indicate that no beam deviation occurs;
wherein a feedback mode of the receive end device includes a periodic feedback mode and a non-periodic feedback mode;
wherein in the periodic feedback mode, the receive end device feeds back the indication information to the transmit end device within a current feedback period, wherein a duration of a feedback period of the periodic feedback mode of the receive end device is equal to a duration of a beam sweep period of the transmit end device, and the beam sweep period and the feedback period are the same period.

2. The method according to claim 1, wherein the determining, based on the DMRS, that a beam deviation occurs specifically comprises:
determining (3031) received signal quality based on the DMRS; and
determining (3032), when the received signal quality is less than a preset quality threshold, that the beam deviation occurs.

3. The method according to claim 2, wherein the feeding back an updated beam to the transmit end device specifically comprises:
determining (3041A), when the transmit end device performs beam sweeping, the updated beam by performing beam matching; and
feeding (3042A) back the updated beam to the transmit end device.

4. The method according to claim 1, wherein the feeding back an updated beam to the transmit end device when determining, based on the DMRS, that a beam deviation occurs specifically comprises:
determining (3041B) received signal quality based on the DMRS;
instructing (3042B), when a degree to which the received signal quality is less than a preset quality threshold exceeds a preset threshold, the transmit end device to perform beam sweeping;
determining (3043B), when the transmit end device performs beam sweeping, the updated beam by performing beam matching; and
feeding (3044B) back the updated beam to the transmit end device.

5. A receive end device (400), wherein the receive end device comprises:
a receiving module (410), configured to receive a demodulation reference signal DMRS sent by a transmit end device; and
a first feedback module (420), configured to feed back an updated beam to the transmit end device when determining, based on the DMRS, that a beam deviation occurs;
**characterized by** further comprising:
a feedback module (430), configured to feed back indication information to the transmit end device when determining, based on the DMRS, that no beam deviation occurs, wherein the indication information is used to indicate that no beam deviation occurs;
wherein a feedback mode of the receive end device includes a periodic feedback mode and a non-periodic feedback mode;
wherein in the periodic feedback mode, the receive end device feeds back the indication information to the transmit end device within a current feedback period, wherein a duration of a feedback period of the periodic feedback mode of the receive end device is equal to a duration of a beam sweep period of the transmit end device, and the beam sweep period and the feedback period are the same period.

6. A beam tracking system, wherein the beam tracking system comprises: the receive end device according to claim 5; and a transmit end device, and the transmit end device comprises:
a first sending module (510), configured to send a demodulation reference signal DMRS to a receive end device; and
a first receiving module (520), configured to receive an updated beam fed back by the receive end device, wherein the updated beam is fed back by the receive end device when the receive end device determines, based on the DMRS, that a beam deviation occurs.

7. A receive end device (600), wherein receive end device comprises: a processor (620), a network interface (650), a memory (640), and a bus (630), wherein the memory and the network interface are separately connected to the processor by using the bus, the processor is configured to execute an instruction stored in the memory, and the processor implements the beam tracking method according to any one of claims 1 to 4 by executing the instruction.

8. A computer readable storage medium, wherein the computer readable storage medium stores an instruction, and when being run on a computer, the computer readable storage medium enables the computer to perform the beam tracking method according to any one of claims 1 to 4.

9. A computer program product comprising an instruction, wherein when being run on a computer, the computer program product enables the computer to perform the beam tracking method according to any one of claims 1 to 4.

## Patentansprüche

1. Strahlverfolgungsverfahren, das durch eine Empfangsendvorrichtung durchgeführt wird, wobei das Verfahren Folgendes umfasst:
Empfangen (201, 302) eines Demodulationsreferenzsignals (DMRS), das durch eine Übertragungsendvorrichtung gesendet wird; und
Rückkoppeln (202, 304) eines aktualisierten Strahls an die Übertragungsendvorrichtung, wenn basierend auf dem DMRS bestimmt wird, dass eine Strahlabweichung auftritt;
**dadurch gekennzeichnet, dass** es ferner Folgendes umfasst:
Rückkoppeln (307) von Anzeigeinformationen an die Übertragungsendvorrichtung, wenn basierend auf dem DMRS bestimmt wird, dass keine Strahlabweichung auftritt, wobei die Anzeigeinformationen verwendet werden, um anzuzeigen, dass keine Strahlabweichung auftritt;
wobei ein Rückkopplungsmodus der Empfangsendvorrichtung einen Modus der periodischen Rückkopplung und einen Modus der nichtperiodischen Rückkopplung beinhaltet;
wobei in dem Modus der periodischen Rückkopplung, die Empfangsendvorrichtung die Anzeigeinformationen an die Übertragungsendvorrichtung innerhalb einer aktuellen Rückkopplungsperiode rückkoppelt, wobei eine Dauer einer Rückkopplungsperiode des Modus der periodischen Rückkopplung der Empfangsendvorrichtung gleich einer Dauer einer Strahlschwenkungsperiode der Übertragungsendvorrichtung ist, und die Strahlschwenkungsperiode und die Rückkopplungsperiode dieselbe Periode sind.

2. Verfahren nach Anspruch 1, wobei das Bestimmen, basierend auf dem DMRS, dass eine Strahlabweichung auftritt, speziell Folgendes umfasst:
Bestimmen (3031) von Empfangssignalqualität basierend auf dem DMRS; und
Bestimmen (3032), wenn die Empfangssignalqualität geringer als ein voreingestellter Qualitätsschwellenwert ist, dass die Strahlabweichung auftritt.

3. Verfahren nach Anspruch 2, wobei das Rückkoppeln eines aktualisierten Strahls an die Übertragungsendvorrichtung speziell Folgendes umfasst:
Bestimmen (3041A), wenn die Übertragungsendvorrichtung ein Strahlschwenken durchführt, des aktualisierten Strahls durch Durchführen von Strahlanpassung; und
Rückkoppeln (3042A) des aktualisierten Strahls an die Übertragungsendvorrichtung.

4. Verfahren nach Anspruch 1, wobei, wenn basierend auf dem DMRS bestimmt wird, dass eine Strahlabweichung auftritt, das Rückkoppeln eines aktualisierten Strahls an die Übertragungsendvorrichtung speziell Folgendes umfasst:
Bestimmen (3041B) von Empfangssignalqualität basierend auf dem DMRS;
Anweisen (3042B), wenn ein Grad, zu dem die Empfangssignalqualität geringer als ein voreingestellter Qualitätsschwellenwert ist, einen voreingestellten Schwellenwert überschreitet, der Übertragungsendvorrichtung, das Strahlschwenken durchzuführen;
Bestimmen (3043B), wenn die Übertragungsendvorrichtung das Strahlschwenken durchführt, des aktualisierten Strahls durch Durchführen von Strahlanpassung; und
Rückkoppeln (3044B) des aktualisierten Strahls an die Übertragungsendvorrichtung.

5. Empfangsendvorrichtung (400), wobei die Empfangsendvorrichtung Folgendes umfasst:
ein Empfangsmodul (410), das konfiguriert ist, um ein Demodulationsreferenzsignal (DMRS) zu empfangen, das durch eine Übertragungsendvorrichtung gesendet wird; und
ein erstes Rückköpplungsmodul (420), das konfiguriert ist, um einen aktualisierten Strahl an die Übertragungsendvorrichtung rückzukoppeln, wenn basierend auf dem DMRS bestimmt wird, dass eine Strahlabweichung auftritt;
**dadurch gekennzeichnet, dass** es ferner Folgendes umfasst:
ein Rückkopplungsmodul (430), das konfiguriert ist, um Anzeigeinformationen an die Übertragungsendvorrichtung rückzukoppeln, wenn basierend auf dem DMRS bestimmt wird, dass keine Strahlabweichung auftritt, wobei die Anzeigeinformationen verwendet werden, um anzuzeigen, dass keine Strahlabweichung auftritt;
wobei ein Rückkopplungsmodus der Empfangsendvorrichtung einen Modus der periodischen Rückkopplung und einen Modus der nichtperiodischen Rückkopplung beinhaltet;
wobei in dem Modus der periodischen Rückkopplung, die Empfangsendvorrichtung die Anzeigeinformationen an die Übertragungsendvorrichtung innerhalb einer aktuellen Rückkopplungsperiode rückkoppelt, wobei eine Dauer einer Rückkopplungsperiode des Modus der periodischen Rückkopplung der Empfangsendvorrichtung gleich einer Dauer einer Strahlschwenkungsperiode der Übertragungsendvorrichtung ist, und die Strahlschwenkungsperiode und die Rückkopplungsperiode dieselbe Periode sind.

6. Strahlverfolgungssystem, wobei das Strahlverfolgungssystem Folgendes umfasst: die Empfangsendvorrichtung nach Anspruch 5; und eine Übertragungsendvorrichtung, und die Übertragungsendvorrichtung Folgendes umfasst:
ein erstes Sendemodul (510), das konfiguriert ist, um ein Demodulationsreferenzsignal (DMRS) an eine Empfangsendvorrichtung zu senden; und
ein erstes Empfangsmodul (520), das konfiguriert ist, um einen aktualisierten Strahl zu empfangen, der durch die Empfangsendvorrichtung rückgekoppelt wird, wobei der aktualisierte Strahl durch die Empfangsendvorrichtung rückgekoppelt wird, wenn die Empfangsendvorrichtung basierend auf dem DMRS bestimmt, dass eine Strahlabweichung auftritt.

7. Empfangsendvorrichtung (600), wobei die Empfangsendvorrichtung Folgendes umfasst: einen Prozessor (620), eine Netzwerkschnittstelle (650), einen Speicher (640) und einen Bus (630), wobei der Speicher und die Netzwerkschnittstelle durch Verwenden des Busses mit dem Prozessor separat verbunden sind, der Prozessor konfiguriert ist, um eine Anweisung auszuführen, die in dem Speicher gespeichert ist, und der Prozessor das Strahlverfolgungsverfahren nach einem der Ansprüche 1 bis 4 durch Ausführen der Anweisung implementiert.

8. Computerlesbares Speichermedium, wobei das computerlesbare Speichermedium eine Anweisung speichert, und, wenn es auf einem Computer laufen gelassen wird, das computerlesbare Speichermedium es dem Computer ermöglicht, das Strahlverfolgungsverfahren nach einem der Ansprüche 1 bis 4 durchzuführen.

9. Computerprogrammprodukt, das eine Anweisung umfasst, wobei, wenn es auf einem Computer laufen gelassen wird, das Computerprogrammprodukt es dem Computer ermöglicht, das Strahlverfolgungsverfahren nach einem der Ansprüche 1 bis 4 durchzuführen.

## Revendications

1. Procédé de suivi de faisceau effectué par un dispositif d'extrémité de réception, dans lequel le procédé comprend : la réception (201, 302) d'un signal de référence de démodulation DMRS envoyé par un dispositif d'extrémité de transmission ; et le renvoi (202, 304) d'un faisceau mis à jour au dispositif d'extrémité de transmission lors de la détermination, sur la base du DMRS, du fait qu'une déviation de faisceau se produit ;
**caractérisé en ce qu'**il comprend en outre :
le renvoi (307) des informations d'indication au dispositif d'extrémité de transmission lors de la détermination, sur la base du DMRS, du fait qu'aucune déviation de faisceau ne se produit, les informations d'indication étant utilisées pour indiquer qu'aucune déviation de faisceau ne se produit ;
un mode de rétroaction du dispositif d'extrémité de réception comportant un mode de rétroaction périodique et un mode de rétroaction non périodique ;
dans le mode de rétroaction périodique, le dispositif d'extrémité de réception renvoyant les informations d'indication au dispositif d'extrémité de transmission dans une période de rétroaction actuelle, une durée d'une période de rétroaction du mode de rétroaction périodique du dispositif d'extrémité de réception étant égale à une durée d'une période de balayage de faisceau du dispositif d'extrémité de transmission, et la période de balayage de faisceau et la période de rétroaction étant la même période.

2. Procédé selon la revendication 1, dans lequel la détermination, sur la base du DMRS, du fait qu'une déviation du faisceau se produit comprend spécifiquement :
la détermination (3031) de la qualité du signal reçu sur la base du DMRS ; et
la détermination (3032), lorsque la qualité du signal reçu est inférieure à un seuil de qualité prédéfini, du fait que la déviation du faisceau se produit.

3. Procédé selon la revendication 2, dans lequel le renvoi d'un faisceau mis à jour au dispositif d'extrémité de transmission comprend spécifiquement :
la détermination (3041 A), lorsque le dispositif d'extrémité de transmission effectue un balayage de faisceau, du faisceau mis à jour en effectuant une correspondance de faisceau ; et
le renvoi (3042A) du faisceau mis à jour au dispositif d'extrémité de transmission.

4. Procédé selon la revendication 1, dans lequel le renvoi d'un faisceau mis à jour au dispositif d'extrémité de transmission lors de la détermination, sur la base du DMRS, du fait qu'une déviation de faisceau se produit comprend spécifiquement :
la détermination (3041B) de la qualité du signal reçu sur la base du DMRS ;
l'instruction (3042B), lorsqu'un degré auquel la qualité du signal reçu est inférieure à un seuil de qualité prédéfini dépasse un seuil prédéfini, au dispositif d'extrémité de transmission d'effectuer un balayage de faisceau ;
la détermination (3043B), lorsque le dispositif d'extrémité de transmission effectue un balayage de faisceau, du faisceau mis à jour en effectuant une correspondance de faisceau ; et
le renvoi (3044B) du faisceau mis à jour au dispositif d'extrémité de transmission.

5. Dispositif d'extrémité de réception (400), dans lequel le dispositif d'extrémité de réception comprend :
un module de réception (410), configuré pour recevoir un signal de référence de démodulation DMRS envoyé par un dispositif d'extrémité de transmission ; et
un premier module de rétroaction (420), configuré pour renvoyer un faisceau mis à jour au dispositif d'extrémité de transmission lors de la détermination, sur la base du DMRS, du fait qu'une déviation de faisceau se produit ;
**caractérisé en ce qu'**il comprend en outre :
un module de rétroaction (430), configuré pour renvoyer des informations d'indication au dispositif d'extrémité de transmission lors de la détermination, sur la base du DMRS, du fait qu'aucune déviation de faisceau ne se produit, les informations d'indication étant utilisées pour indiquer qu'aucune déviation de faisceau ne se produit ;
un mode de rétroaction du dispositif d'extrémité de réception comportant un mode de rétroaction périodique et un mode de rétroaction non périodique ;
dans le mode de rétroaction périodique, le dispositif d'extrémité de réception renvoyant les informations d'indication au dispositif d'extrémité de transmission dans une période de rétroaction actuelle, une durée d'une période de rétroaction du mode de rétroaction périodique du dispositif d'extrémité de réception étant égale à une durée d'une période de balayage de faisceau du dispositif d'extrémité de transmission, et la période de balayage de faisceau et la période de rétroaction étant la même période.

6. Système de suivi de faisceau, dans lequel le système de suivi de faisceau comprend :
le dispositif d'extrémité de réception selon la revendication 5 ; et un dispositif d'extrémité de transmission, et le dispositif d'extrémité de transmission comprend :
un premier module d'envoi (510), configuré pour envoyer un signal de référence de démodulation DMRS à un dispositif d'extrémité de réception ; et
un premier module de réception (520), configuré pour recevoir un faisceau mis à jour renvoyé par le dispositif d'extrémité de réception, le faisceau mis à jour étant renvoyé par le dispositif d'extrémité de réception lorsque le dispositif d'extrémité de réception détermine, sur la base du DMRS, qu'une déviation de faisceau se produit.

7. Dispositif d'extrémité de réception (600), dans lequel le dispositif d'extrémité de réception comprend : un processeur (620), une interface réseau (650), une mémoire (640) et un bus (630), la mémoire et l'interface réseau étant connectées séparément au processeur à l'aide du bus, le processeur étant configuré pour exécuter une instruction stockée dans la mémoire, et le processeur mettant en œuvre le procédé de suivi de faisceau selon l'une quelconque des revendications 1 à 4.

8. Support de stockage lisible par ordinateur, dans lequel le support de stockage lisible par ordinateur stocke une instruction, et lorsqu'il est lancé sur un ordinateur, le support de stockage lisible par ordinateur permet à l'ordinateur d'effectuer le procédé de suivi de faisceau selon l'une quelconque des revendications 1 à 4.

9. Produit-programme d'ordinateur comprenant une instruction, dans lequel lorsque lancé sur un ordinateur, le programme d'ordinateur permet à l'ordinateur d'effectuer le procédé selon l'une quelconque des revendications 1 à 4.
